# EUROPEAN PATENT APPLICATION

(11) **EP 1 621 484 A1**
(43) Date of publication of application: **01.02.2006**
(21) Application number: 05106434.3
(22) Date of filing: 14.07.2005
(51) Int. Cl.: B65G 17/06

(54) **Replaceable snap-on modular overlay for rod and link turn-curve conveyor belts**

(30) Priority: 27.07.2004 IT PD20040199
(71) Applicant: Alit S.r.l., Frazione, Marsango PD 35010 Campo San Martino (IT)
(72) Inventor: Rettore Michele, 35010 San Giorgio delle Perticate PD (IT); Tomasello, Gianni, 35010 Villa del Conte PD (IT); Malaman, Mirco, 35010 Piazzola sul Brenta PD (IT)
(74) Representative: Modiano, Micaela Nadia

(57) **Abstract**

A modular covering element for bar-type conveyors, of the type constituted by two opposite and rigidly coupled series (11, 12) of coupling members (13, 14), shaped so as to surround a pair of bars (15, 17) of a conveyor belt (16), a first series (11) for coupling to a first bar (15) of a conveyor belt (16) and a second series (12) for coupling to a subsequent second bar (17) of the belt (16), the coupling members (13, 14) of one series (11, 12) being offset with respect to the members of the other opposite series (11, 12). The covering element (10) is constituted by two half-shells (18, 19) which are joined to each other by way of mating means (20).

## Description

The present invention relates to a modular covering element for bar-type conveyors.

As is known, one widely adopted and appreciated type of conveyor belt is constituted by two parallel chains associated with motorized driving gears, said chains being connected transversely by bars which join corresponding mutually opposite links of said chains.

Modular covering elements suitable to form a substantially grid-like supporting and conveyance surface are then associated with said bars.

In particular, and merely by way of example, this type of conveyor belt with modular covering elements is commonly used in the food sector in processes for cooling, freezing, rising, sterilization, baking, and other similar treatments, for food or in any case for products that have similar production problems.

Such modular covering elements are structured so that they can support not only objects, foodstuffs and products in general with substantial contact surfaces but also small objects, foodstuffs and products, which accordingly need to be supported by a sufficiently continuous and uninterrupted surface.

Currently known modular covering elements for bar-type conveyor belts are generally constituted by two opposite and rigidly coupled series of coupling members contoured so as to surround a pair of bars of the conveyor belt.

These coupling members are generally constituted by substantially hook-shaped engagement elements.

A first series of members provides coupling to a first bar of the bar-type conveyor belt and a second series is suitable to provide coupling to a subsequent second bar of the belt.

The coupling members of one series are offset with respect to the coupling members of the opposite series, so that if a first modular element is fixed to a first bar and a second bar, a second modular element can likewise be engaged with the second bar in the spaces not occupied by the coupling members of the first modular element and with a third subsequent bar, so as to form a flexible supporting net of the conveyor belt.

The offset arrangement of the series of coupling members gives the modular elements a flexibility by way of which they adapt in an optimum manner to the bars of the belt even along the bends that the belt is required to trace.

These known modular elements are mainly made of plastic material.

Currently known modular elements have a pair of openings, one at each of the two series of coupling members, for the snap insertion of a bar of the belt in each series.

Such openings are for example both directed downward, or one is directed downward and one is directed laterally.

The positions of these openings on the coupling members on the one hand allow easy snap insertion of the bars in the openings but on the other hand do not ensure perfect stability of the fixing by snap insertion.

Once the bar has been inserted in the corresponding coupling member, it in fact still remains proximate to the insertion opening, from which it might detach as a consequence of an unexpected movement of the bars of the belt or due to other similar events.

Further, the modular element is fixed to the bars of the belt generally by means of two successive movements for snap insertion of two bars of the belt, each in one of the two openings of the modular element.

The second movement for snap insertion of the second bar must be performed while taking care to avoid unwanted simultaneous disengagement of the modular element from the second bar, an occurrence which is allowed by the need to tension the modular element in order to arrange the second opening so that it faces the second bar.

The aim of the present invention is to provide a modular covering element for bar-type conveyors that is capable of obviating the drawbacks noted in known types of modular covering element.

In particular, within this aim, an object of the present invention is to provide a modular covering element for bar conveyors which improves the fixing of the module to the bars without compromising its elastic qualities and functionality.

Another object of the present invention is to provide a modular covering element that is easily applied to the bars of a conveyor belt.

A further object of the present invention is to provide a modular covering element that can be applied to bar conveyors of a known type which are already in use.

A still further object of the present invention is to provide a modular covering element for bar-type conveyors that can be manufactured at low cost with known systems and technologies.

This aim and these and other objects which will become better apparent hereinafter are achieved by a modular covering element for bar-type conveyors, of the type constituted by two opposite and rigidly coupled series of coupling members, shaped so as to surround a pair of bars of a conveyor belt, a first series for coupling to a first bar of a conveyor belt and a second series for coupling to a subsequent second bar of said belt, the coupling members of one series being offset with respect to the members of the other opposite series, said covering element being characterized in that it is constituted by two half-shells which are joined to each other by way of mating means.

Further characteristics and advantages of the invention will become better apparent from the following detailed description of four preferred but not exclusive embodiments thereof, illustrated by way of non-limiting example in the accompanying drawings, wherein:
Figure 1 is a top view of portion of a bar-type conveyor belt equipped with multiple modular covering elements according to the invention;
Figure 2 is a perspective view of a modular covering element according to the invention in a first embodiment;
Figure 3 is a sectional exploded view of a modular covering element according to the invention in the first embodiment of Figure 2;
Figure 4 is a sectional view of a modular covering element according to the invention in the first embodiment of Figure 2, assembled around a pair of bars of a conveyor belt;
Figure 5 is an exploded perspective view of a portion of a second embodiment of the invention;
Figure 6 is a side view of the second embodiment of the invention shown in Figure 5;
Figure 7 is an exploded perspective view of a portion of a third embodiment of the invention;
Figure 8 is a side view of the third embodiment of the invention shown in Figure 7;
Figure 9 is an exploded perspective view of a portion of a fourth embodiment of the invention;
Figure 10 is a side view of the fourth embodiment of the invention shown in Figure 9.

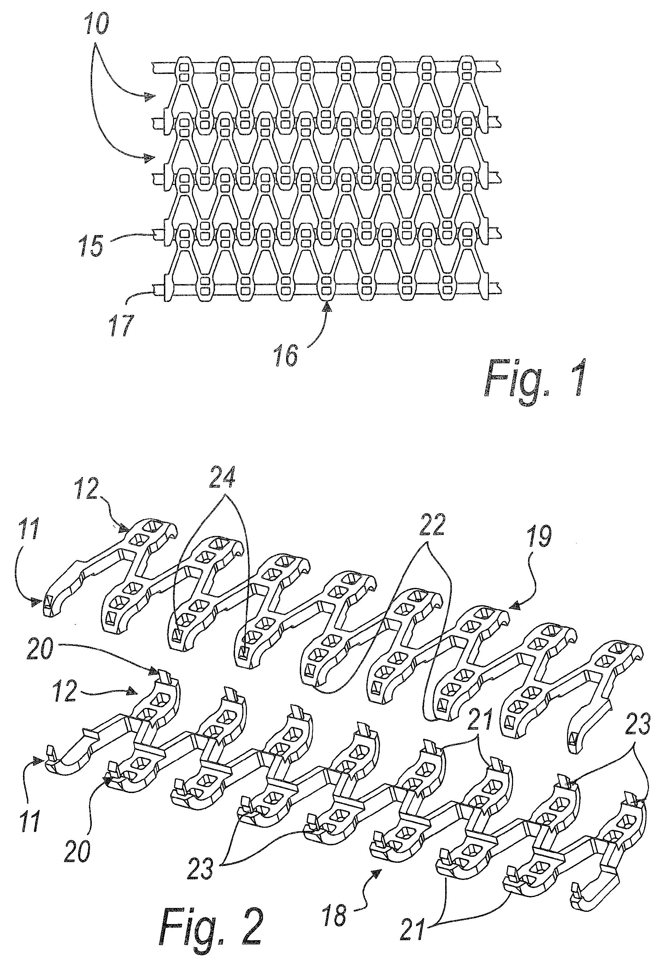

With reference to the figures, a first embodiment of a modular covering element for bar-type conveyors according to the invention is generally designated by the reference numeral 10 in Figures 2 to 4.

Such covering element 10 is constituted by two opposite and rigidly coupled series of coupling members 13 and 14, which are shaped so as to surround a pair of bars 15 and 17 of a conveyor belt 16, which is shown by way of example in Figure 1.

A first series 11 of coupling members 13 provides coupling to a first bar 15 of the conveyor belt 16, and a second series 12 of coupling members 14 acts as a coupling to a subsequent second bar 17 of the belt 16.

The coupling members 13 of the first series 11 are offset with respect to the members of the second opposite series 12.

The modular element 10 is constituted by two half-shells 18 and 19, which are mutually joined by way of mating means 20 so as to form the two series 11 and 12 of coupling members 13 and 14.

Within the pair of half-shells, a first half-shell 18 is arranged so as to affect the upper part of the first bar 15 and the second bar 17 and a second half-shell 19 surrounds the bars 15 and 17 in a lower region.

First connecting ends 21 of the first half-shell 18 and second connecting ends 22 of the second half-shell 19 face each other and are mutually joined substantially at the level of the horizontal central plane of the bars 15 and 17.

The mating means 20 are constituted by male elements 23, which protrude from the first connecting ends 21 and are suitable to enter corresponding female elements 24 provided on the second connecting ends 22.

In the first embodiment of the covering element 10 according to the invention, the male elements 23 are constituted by tabs provided with a snap-acting interlocking tooth 25.

The tooth 25 is suitable to grip a corresponding step 26 of a complementarily shaped seat which provides the female element 24.

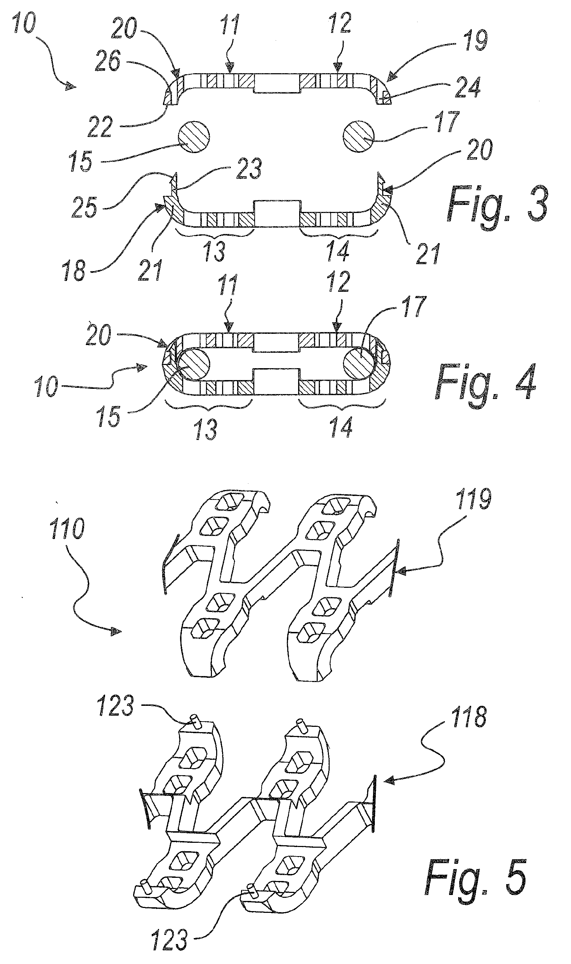

The association of the modular covering element 10 with the bars 15 and 17 of the conveyor belt 16, shown schematically in Figures 3 and 4, is therefore very simple, as it requires arranging the second half-shell 19 so that it rests below a pair of bars and subsequently moving closer from above the first half-shell 18, so that the tabs enter the seats until the tooth 25 snaps onto the respective step 26.

Obviously, assembly can also occur by swapping the position of the half-shells.

The two half-shells 18 and 19 assembled around the two bars 15 and 17 form a modular element 10 which has no openings through which the bars can disengage.

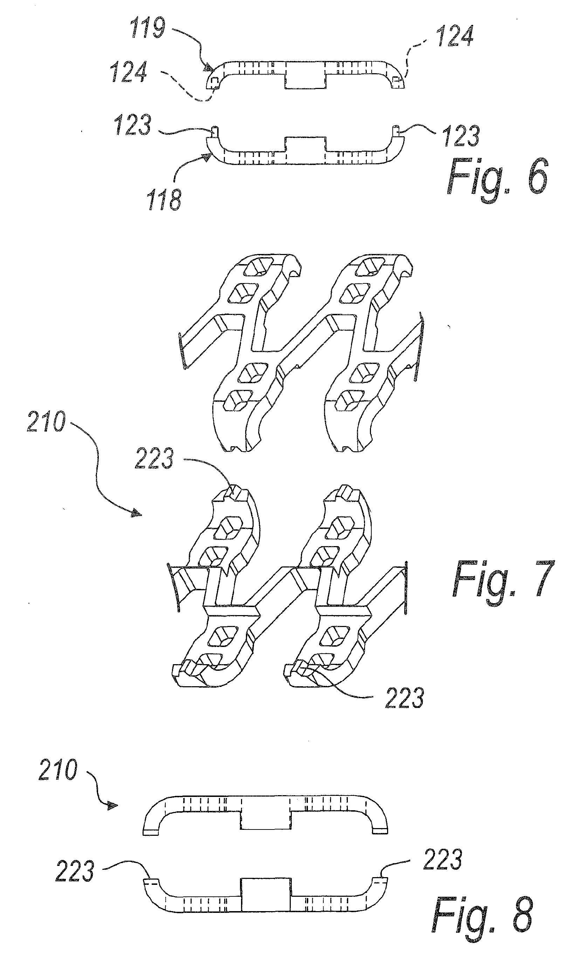

In a second embodiment of the modular covering element, shown in Figures 5 and 6 and designated therein by the reference numeral 110, the male element 123 is constituted by a cylindrical tab, which is suitable to enter a complementarily shaped seat which forms the female element 124.

The cylindrical tab is fixed in the corresponding seat by means of an adhesive bonding operation or alternatively by means of an ultrasound welding operation.

The assembly sequence is similar to what has been described for the first embodiment 10 of the invention, except for the application of the adhesive before joining the two half-shells 118 and 119 if the two half shells are joined by adhesive bonding.

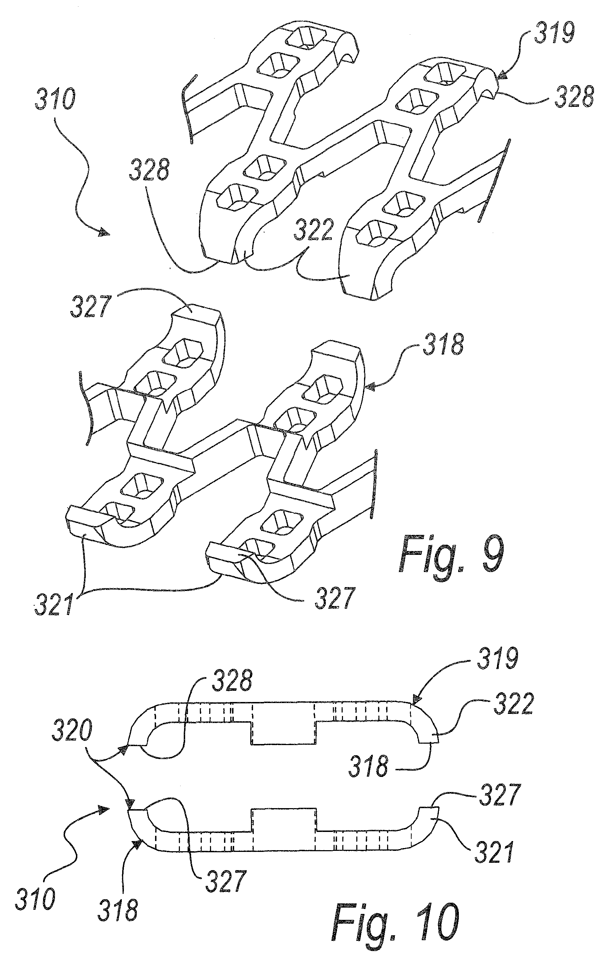

In a third embodiment of a modular covering elements according to the invention, designated in Figures 7 and 8 by the reference numeral 210, the male element 223 is constituted by a substantially prism-shaped tab, which is suitable to be arranged in a complementarily shaped seat, which in this case forms the female element 224.

The prism-shaped tab is fixed to its seat by ultrasound welding or, as an alternative, by way of an adhesive bonding operation.

In the second and third embodiments, the tabs and the corresponding seats are suitable to center the two half-shells or to facilitate the mutual arrangement, which is essential for the adhesive bonding and welding operations.

A fourth embodiment of a modular covering element according to the invention is shown in Figures 9 and 10 and designated therein by the reference numeral 310, and is characterized in that the mating means 320 are constituted, for each connecting end 321 and 322 respectively, by a substantially flat surface 327 of the ends 321 of the first half-shell 318, which is fixed to the facing surface 328 of the opposite second half-shell 319 by way of an adhesive bonding operation or by way of an ultrasound welding operation.

In practice it has been found that the invention thus described solves the problems noted in known types of modular covering element for bar-type conveyors.

In particular, the present invention provides a modular covering element for bar-type conveyors which improves the fixing of the modular element to the bar without compromising its elastic qualities and functionality.

Moreover, the present invention provides a modular covering element that is easy to apply to the bars of a conveyor belt.

Further, the present invention provides a modular covering element which can also be applied to known types of bar conveyor which are already in use.

Moreover, the present invention provides a modular covering element for bar-type conveyors which can be manufactured at low cost with known systems and technologies.

The invention thus conceived is susceptible of numerous modifications and variations, all of which are within the scope of the appended claims; all the details may further be replaced with other technically equivalent elements.

In practice, the materials employed, so long as they are compatible with the specific use, as well as the dimensions, may be any according to the requirements and the state of the art.

The disclosures in Italian Patent Application No. PD2004A000199 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A modular covering element for bar-type conveyors, of the type constituted by two opposite and rigidly coupled series (11, 12) of coupling members (13, 14), shaped so as to surround a pair of bars (15, 17) of a conveyor belt (16), a first series (11) for coupling to a first bar (15) of a conveyor belt (16) and a second series (12) for coupling to a subsequent second bar (17) of said belt (16), the coupling members (13, 14) of one series (11, 12) being offset with respect to the members of the other opposite series (11, 12), said covering element being **characterized in that** it is constituted by two half-shells (18, 19) which are joined to each other by way of mating means (20).

2. The modular covering element according to claim 1, **characterized in that** said pair of half-shells (18, 19) comprises a first half-shell (18), which is arranged so as to affect the upper part of said first bar (15) and said second bar (17), and a second half-shell (19), which surrounds said bars (15, 17) in a lower region.

3. The modular covering element according to claim 2, **characterized in that** the connecting ends (21, 22) of said first half-shell (18) and said second half-shell (19) face each other and are mutually joined substantially at the level of the horizontal central plane of the bars (15, 17).

4. The modular covering element according to one or more of the preceding claims, **characterized in that** said fixing means (20) are constituted by male elements (23, 123, 223), which protrude from first ends (21, 121, 221) of said connecting ends and are suitable to enter corresponding female elements (24, 124, 224) provided on second ends (22, 122, 222) of said connecting ends.

5. The modular covering element according to claim 4, **characterized in that** said male elements (23) are constituted by tabs provided with a snap-acting interlocking tooth (25), which is adapted to grip a corresponding step (26) of a complementarily shaped seat which provides said female element (24).

6. The modular covering element according to claim 4, **characterized in that** said male element (123) is constituted by a cylindrical tab, which is adapted to enter a complementarily shaped seat which forms said female element (124), said cylindrical tab being fixed in the corresponding seat by way of an adhesive bonding operation.

7. The modular covering element according to claim 4, **characterized in that** said male element (223) is constituted by a substantially prism-shaped tab, which is adapted to be arranged in a complementarily shaped seat which forms said female element (223), the prism-shaped tab being fixed to its seat by ultrasound welding.

8. The modular covering element according to one or more of the preceding claims 1 to 3, **characterized in that** said fixing means (220) are constituted, for each connecting end (221, 222), by a substantially flat surface (227), which is fixed to the facing surface (228) of the opposite half-shell (218, 219) by way of an adhesive bonding operation or of an ultrasound welding operation.
